# EUROPEAN PATENT APPLICATION

(11) **EP 4 604 464 A1**
(43) Date of publication of application: **20.08.2025**
(21) Application number: 22961748.5
(22) Date of filing: 13.10.2022
(51) Int. Cl.: H04L 27/00

(54) **SENSING MEASUREMENT ESTABLISHMENT METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Stöckeler, Ferdinand
(86) International application number: PCT/CN2022/125178
(87) International publication number: WO 2024/077559

(57) **Abstract**

The embodiments of the present disclosure relate to the technical field of mobile communications. Provided are a sensing measurement establishment method, an electronic device, and a storage medium. The sensing measurement establishment method is applied to a station device. The method comprises: sending a measurement establishment request frame, wherein the measurement establishment request frame carries first time interval information of the occurrence of two continuous sensing measurement events; the first time interval information indicates at least one of the following: a first time interval value of the occurrence of the sensing measurement events, the maximum value of the first time interval value, and the minimum value of the first time interval value. The embodiments of the present disclosure provide a method for an STA and an AP to negotiate the time interval of sensing measurement events.

## Description

### TECHNICAL FIELD

Embodiments of the present disclosure relate to the field of mobile communication technologies, and more particularly relate to a sensing measurement setup method, an electronic device and a storage medium.

### BACKGROUND

With the rapid development of mobile communication technologies, great progress has been made in wireless fidelity (Wi-Fi) technologies with respect to the transmission rate, throughput and the like. Among the Wi-Fi technologies currently studied, wireless local area network (WLAN) sensing technologies may be supported. For example, application scenarios include location discovery, proximity detection, and presence detection in dense environments (such as home environments and corporate environments), and the like.

The WLAN sensing procedure generally includes a trigger based (TB) mode and a non-trigger based (NTB) mode. Specifically, the TB mode means that an access point (AP) is an initiator or transmitter, and the NTB mode means that a station (STA) is an initiator or transmitter. In the NTB sensing measurement, each sensing measurement setup (MS) process may include multiple sensing measurement instances, and a time interval is needed for the occurrence of consecutive sensing measurement instances. Therefore, there is a need to provide a manner for the STA and the AP to negotiate the time interval of sensing measurement instances so as to improve the NTB sensing measurement signaling process and adapt it to wireless sensing needs.

### SUMMARY

Embodiments of the present disclosure provide a sensing measurement setup method, an electronic device and a storage medium so as to provide a manner for an STA and an AP to negotiate the time interval of sensing measurement instances.

In an aspect, embodiments of the present disclosure provide a sensing measurement setup method, performed by a station device and including: sending a sensing measurement setup request frame, in which the sensing measurement setup request frame carries first time interval information between two consecutive sensing measurement instances, and the first time interval information indicates at least one of: a value of a first time interval between the two consecutive sensing measurement instances, a maximum value of the first time interval, or a minimum value of the first time interval.

In another aspect, embodiments of the present disclosure provide a sensing measurement setup method, performed by an access point device and including: receiving a sensing measurement setup request frame, in which the sensing measurement setup request frame carries first time interval information between two consecutive sensing measurement instances, and the first time interval information indicates at least one of: a value of a first time interval between the two consecutive sensing measurement instances that is supported by the access point device, a maximum value of the first time interval, or a minimum value of the first time interval.

In another aspect, embodiments of the present disclosure provide an electronic device, being a station device and including: a sending module configured to send a sensing measurement setup request frame, in which the sensing measurement setup request frame carries first time interval information between two consecutive sensing measurement instances, and the first time interval information indicates at least one of: a value of a first time interval between the two consecutive sensing measurement instances, a maximum value of the first time interval, or a minimum value of the first time interval.

In another aspect, embodiments of the present disclosure provide an electronic device, being an access point device and including: a receiving module configured to receive a sensing measurement setup request frame, in which the sensing measurement setup request frame carries first time interval information between two consecutive sensing measurement instances, and the first time interval information indicates at least one of: a value of a first time interval between the two consecutive sensing measurement instances that is supported by the access point device, a maximum value of the first time interval, or a minimum value of the first time interval.

Embodiments of the present disclosure further provide an electronic device, including: a memory, a processor, and a computer program stored in the memory and runnable on the processor, in which the processor is configured to implement the method according to one or more of the embodiments of the present disclosure when executing the program.

Embodiments of the present disclosure further provide a computer-readable storage medium having stored therein a computer program that, when executed by a processor, causes the method according to one or more of the embodiments of the present disclosure to be implemented.

In the embodiments of the present disclosure, the STA sends a sensing measurement setup request frame, and carries first time interval information between two consecutive sensing measurement instances in the sensing measurement setup request frame. Thus, it is possible to realize the negotiation between the STA and the AP on the time interval between the two consecutive sensing measurement instances during the MS process, so as to improve the NTB sensing measurement signaling process and adapt it to the wireless sensing needs.

Additional aspects and advantages of embodiments of the present disclosure will be given in part in the following descriptions, which will become apparent from the following descriptions, or be learned from the practice of the present disclosure.

### BRIEF DESCRIPTION OF THE DRAWINGS

In order to more clearly illustrate the technical solutions of embodiments of the present disclosure, the drawings to be used in the description of the embodiments of the present disclosure will be briefly introduced below. Obviously, the drawings described below are only some embodiments of the present disclosure. For those of ordinary skill in the art, other drawings can also be obtained based on these drawings without creative labor.
FIG. 1 is a first flow chart of a sensing measurement setup method provided in an embodiment of the present disclosure.
FIG. 2 is a first schematic diagram of a first example according to an embodiment of the present disclosure.
FIG. 3 is a second schematic diagram of the first example according to an embodiment of the present disclosure.
FIG. 4 is a third schematic diagram of the first example according to an embodiment of the present disclosure.
FIG. 5 is a second flow chart of a sensing measurement setup method provided in an embodiment of the present disclosure.
FIG. 6 is a third flow chart of a sensing measurement setup method provided in an embodiment of the present disclosure.
FIG. 7 is a fourth flow chart of a sensing measurement setup method provided in an embodiment of the present disclosure.
FIG. 8 is a first schematic block diagram of an electronic device provided in an embodiment of the present disclosure.
FIG. 9 is a second schematic block diagram of an electronic device provided in an embodiment of the present disclosure.
FIG. 10 is a third schematic block diagram of an electronic device provided in an embodiment of the present disclosure.

### DETAILED DESCRIPTION

The term "and/or" in embodiments of the present disclosure, which describes an association relationship of associated objects, means that there may be three relationships, for example, A and/or B, which may mean that A exists alone, A and B exist at the same time, and B exists alone. A character "/" generally indicates that contextually associated objects are in an "or" relationship.

The term "a plurality of" in embodiments of the present disclosure refers to two or more, and other quantifiers are similar thereto.

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of apparatuses and methods consistent with some aspects related to the disclosure as recited in the appended claims.

Terms used herein in the present disclosure are only for the purpose of describing specific embodiments, but should not be construed to limit the present disclosure. As used in the present disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in the present disclosure for describing various information, these information should not be limited by these terms. These terms are only used for distinguishing information of the same type from each other. For example, first information may also be referred to as second information, and similarly, the second information may also be referred to as the first information, without departing from the scope of the present disclosure. For example, as used herein, the term "if" may be construed to mean "when" or "upon" or "in response to determining" depending on the context.

The technical solutions in embodiments of the present disclosure will be described clearly and completely below with reference to the accompanying drawings in embodiments of the present disclosure. Apparently, the described embodiments are only some embodiments of the present disclosure, rather than all embodiments of the present disclosure. All other embodiments obtained by those of ordinary skill in the art based on the embodiments of the present disclosure without making creative labor belong to the protection scope of the present disclosure.

Embodiments of the present disclosure provide a sensing measurement setup method, an electronic device and a storage medium so as to provide a manner for an STA and an AP to negotiate the time interval of sensing measurement instances.

The method and the apparatus are based on the same application concept. Since the method and the apparatus solve the problem in a similar principle, regarding the implementations of the apparatus and the method, reference may be made to each other, and repeated parts thereof will not be elaborated.

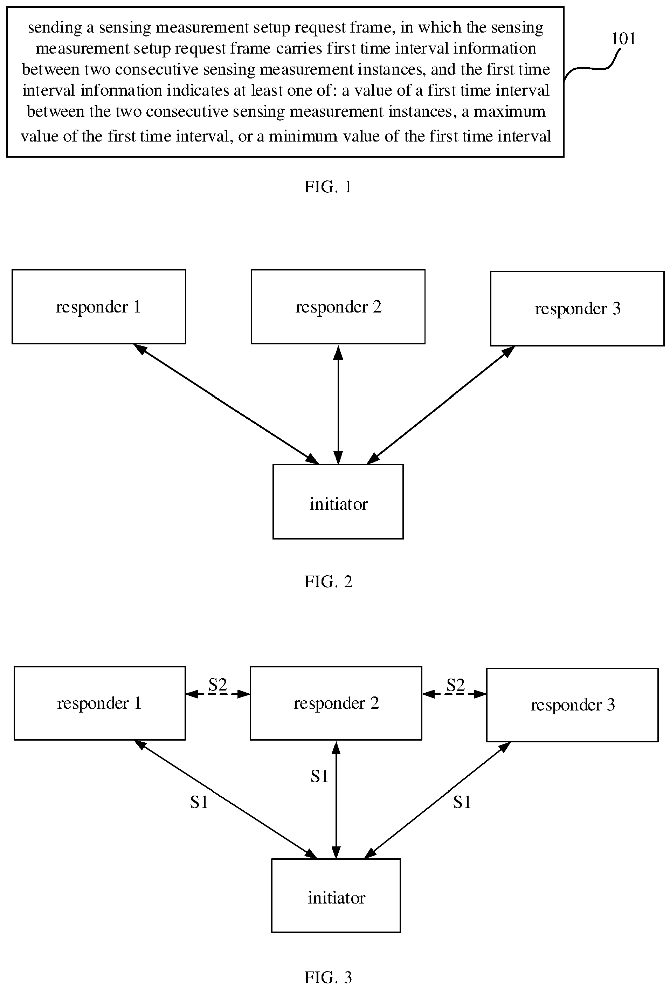

As shown in FIG. 1, an embodiment of the present disclosure provides a sensing measurement setup method. Optionally, the method may be performed by a station device. Specifically, the method may include the following steps.

At step 101, a sensing measurement setup request frame is sent, in which the sensing measurement setup request frame carries first time interval information between two consecutive sensing measurement instances, and the first time interval information indicates at least one of: a value of a first time interval between the two consecutive sensing measurement instances, a maximum value of the first time interval, or a minimum value of the first time interval.

As a first example, referring to FIGS. 2 to 4, the architecture of WLAN sensing to which the sensing measurement setup method provided in this embodiment of the present disclosure is applied as well as the WLAN sensing procedure are first introduced.

FIG. 2 shows a schematic diagram of the architecture of a WLAN sensing (process), in which a sensing initiator (or initiator) initiates WLAN sensing (for example, initiates a WLAN sensing session), and there may be multiple sensing responders (or sensing receivers) or responders responding thereto, as shown by responder 1, responder 2, and responder 3 in FIG. 2. When the sensing initiator initiates the WLAN sensing, multiple associated or unassociated WLAN sensing responders for the WLAN sensing may respond thereto.

Referring to FIG. 3, the sensing initiator communicates with the sensing responder via a communication connection, as shown by communication connection S1; and the sensing responders communicate with each other via communication connection S2.

Each sensing initiator can be a client, and each sensing responder (in this example, i.e. sensing responder 1 to sensing responder 3) can be a station (STA) device or an access point (AP) device. In addition, the STA and the AP can play multiple roles in the WLAN sensing procedure. For example, in the WLAN sensing procedure, the STA can also serve as a sensing initiator, and the sensing initiator may be a sensing transmitter, a sensing receiver, or both, or neither. In the WLAN sensing procedure, the sensing responder may also be a sensing transmitter, a sensing receiver, or both.

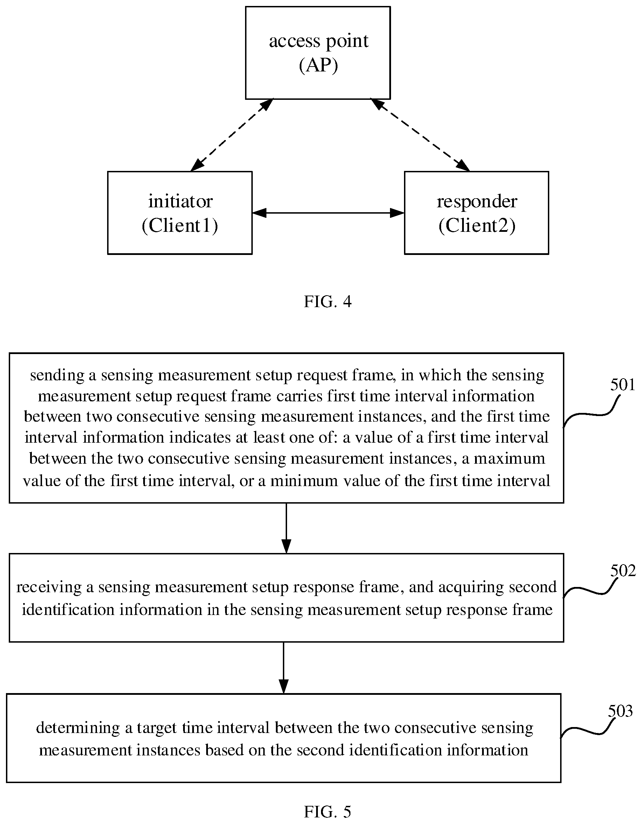

As another architecture, as shown in FIG. 4, the sensing initiator and the sensing responder can both be clients, and the two can communicate with each other by connecting to the same AP device. In FIG. 4, Client1 is the sensing initiator, and Client2 is the sensing responder.

Typically, the WLAN sensing procedure generally includes a trigger based (TB) mode and a non-trigger based (NTB) mode. Specifically, the TB mode means that an AP is an initiator or transmitter, and the NTB mode means that an STA is an initiator or transmitter. In the NTB sensing measurement, each sensing measurement setup (MS) process may include multiple sensing measurement instances, and a time interval is needed for the occurrence of consecutive sensing measurement instances. Optionally, the time interval for the occurrence of each sensing measurement instance may be determined according to the needs of an upper-layer application, for example, there may be a minimum or maximum time interval. In the embodiments of the present disclosure, during the MS process, according to the negotiation between the STA (sensing initiator) and the AP (sensing responder), the STA sends a sensing measurement setup request frame (MS request frame), and carries first time interval information for the occurrence of two consecutive sensing measurement instances in the sensing measurement setup request frame, and the two consecutive sensing measurement instances are two consecutive measurement instances belonging to the same measurement setup identifier (MS ID).

Specifically, the first time interval information indicates at least one of a value of a first time interval between the two consecutive sensing measurement instances, a maximum value of the first time interval, or a minimum value of the first time interval. That is, the first time interval information may include a specific value of a time interval between two consecutive sensing measurement instances, such as 10 milliseconds (ms); may also include a maximum value of the time interval, such as 20ms; and may also include a minimum value of the time interval, such as 5ms.

Optionally, the first time interval information is carried in a sensing measurement parameter information element.

In this embodiment of the present disclosure, the STA sends a sensing measurement setup request frame, and carries first time interval information between two consecutive sensing measurement instances in the sensing measurement setup request frame. Thus, it is possible to realize the negotiation between the STA and the AP on the time interval between the two consecutive sensing measurement instances during the MS process, so as to improve the NTB sensing measurement signaling process and adapt it to the wireless sensing needs.

An embodiment of the present disclosure provides a sensing measurement setup method. Optionally, the method may be performed by a station device. The method may include the following steps.

A sensing measurement setup request frame is sent, in which the sensing measurement setup request frame carries first time interval information between two consecutive sensing measurement instances, and the first time interval information indicates at least one of: a value of a first time interval between the two consecutive sensing measurement instances, a maximum value of the first time interval, or a minimum value of the first time interval.

The first time interval information includes first identification information, in which the first identification information indicates the existence or form of the first time interval information. Specifically, in a case that the first identification information is a first parameter value, for example, the first parameter value is 1, the first identification information indicates that the first time interval information carries at least one of the value of the first time interval between the two consecutive sensing measurement instances, the maximum value of the first time interval, or the minimum value of the first time interval; and in a case that the first identification information is a second parameter value, for example, the second parameter value is 0, the first identification information indicates that the first time interval information is the maximum value of the first time interval or the minimum value of the first time interval. The maximum value of the first time interval and the minimum value of the first time interval may be preset and pre-negotiated values, respectively.

Referring to FIG. 5, an embodiment of the present disclosure provides a sensing measurement setup method. Optionally, the method may be performed by a station device. The method may include the following steps.

At step 501, a sensing measurement setup request frame is sent, in which the sensing measurement setup request frame carries first time interval information between two consecutive sensing measurement instances, and the first time interval information indicates at least one of: a value of a first time interval between the two consecutive sensing measurement instances, a maximum value of the first time interval, or a minimum value of the first time interval.

At step 502, a sensing measurement setup response frame is received, and second identification information in the sensing measurement setup response frame is acquired.

After the STA sends the sensing measurement setup request frame, the AP replies with a measurement setup response (MS response) frame, and feeds back whether the AP accepts the first time interval information requested by the STA in the sensing measurement setup request frame via the second identification information in the sensing measurement setup response frame.

At step 503, a target time interval between the two consecutive sensing measurement instances is determined based on the second identification information.

Optionally, in a case that the second identification information is a third parameter value, the target time interval between the two consecutive sensing measurement instances is determined according to the first time interval information; and in a case that the second identification information is a fourth parameter value, the target time interval in the sensing measurement setup response frame is acquired.

When the second identification information is the third parameter value, for example, the second identification information is a status code, and the third parameter value is "success", indicating that the AP accepts the first time interval information, then the target time interval between the two consecutive sensing measurement instances is determined according to the first time interval information. The target time interval may be the first time interval, or a time value selected between the maximum value of the first time interval and the minimum value of the first time interval (including the maximum value and the minimum value).

When the second identification information is the fourth parameter value, for example, the second identification information is a status code, and the third parameter value is "reject or decline", then a time value specified by the AP in the sensing measurement setup response frame is acquired as the target time interval.

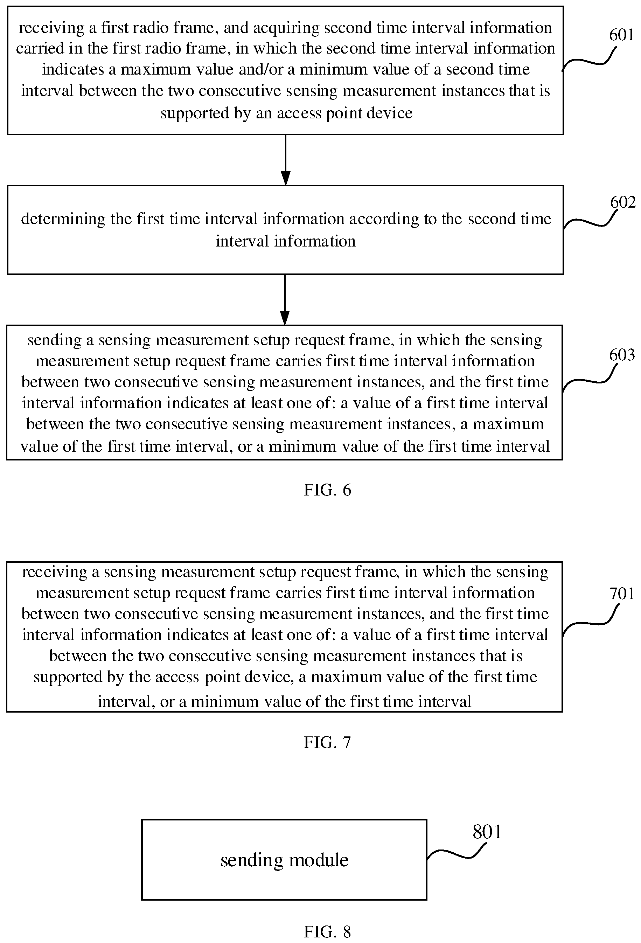

Referring to FIG. 6, an embodiment of the present disclosure provides a sensing measurement setup method. Optionally, the method may be performed by a station device. The method may include the following steps.

At step 601, a first radio frame is received, and second time interval information carried in the first radio frame is acquired, in which the second time interval information indicates a maximum value and/or a minimum value of a second time interval between the two consecutive sensing measurement instances that is supported by an access point device.

Optionally, the first radio frame includes a beacon frame or a probe response frame.

The AP carries the second time interval information in the first radio frame. The second time interval information is, for example, a time interval supported by the AP, so that the STA may select a target time interval therefrom.

At step 602, the first time interval information is determined according to the second time interval information.

During the sensing measurement setup process, the STA selects the first time interval information from the second time interval information. Specifically, the STA selects the value of the first time interval, the maximum value of the first time interval and/or the minimum value of the first time interval from the maximum value of the second time interval or the minimum value of the second time interval or between the maximum value of the second time interval and the minimum value of the second time interval.

For example, when the STA selects the maximum value of the first time interval, the maximum value of the first time interval is not greater than the maximum value of the second time interval; when the STA selects the maximum value of the first time interval, the maximum value of the first time interval is not greater than the maximum value of the second time interval; or the value of the first time interval is selected between the maximum value of the second time interval and the minimum value of the second time interval.

At step 603, a sensing measurement setup request frame is sent, in which the sensing measurement setup request frame carries first time interval information between two consecutive sensing measurement instances, and the first time interval information indicates at least one of: a value of a first time interval between the two consecutive sensing measurement instances, a maximum value of the first time interval, or a minimum value of the first time interval.

An embodiment of the present disclosure provides a sensing measurement setup method. Optionally, the method may be performed by a station device. The method may include the following steps.

A first radio frame is received, and second time interval information that is carried in the first radio frame is acquired, in which the second time interval information indicates a maximum value and/or a minimum value of a second time interval between the two consecutive sensing measurement instances that is supported by an access point device.

The first radio frame further includes third identification information, and the third identification information indicates a sensing measurement type supported by the access point device, optionally, one bit may be used to identify capability information of the AP supporting NTB and TB sensing measurements; the sensing measurement type includes a trigger based (TB) sensing measurement and/or a non-trigger based (NTB) sensing measurement.

The first time interval information is determined according to the second time interval information.

A sensing measurement setup request frame is sent, in which the sensing measurement setup request frame carries first time interval information between two consecutive sensing measurement instances, and the first time interval information indicates at least one of: a value of a first time interval between the two consecutive sensing measurement instances, a maximum value of the first time interval, or a minimum value of the first time interval.

In this embodiment of the present disclosure, the STA sends a sensing measurement setup request frame, and carries first time interval information between two consecutive sensing measurement instances in the sensing measurement setup request frame. Thus, it is possible to realize the negotiation between the STA and the AP on the time interval between the two consecutive sensing measurement instances during the MS process, so as to improve the NTB sensing measurement signaling process and adapt it to the wireless sensing needs.

Referring to FIG. 7, an embodiment of the present disclosure provides a sensing measurement setup method. Optionally, the method may be performed by an electronic device, and the electronic device may be an access point device. The method may include the following steps.

At step 701, a sensing measurement setup request frame is received, in which the sensing measurement setup request frame carries first time interval information between two consecutive sensing measurement instances, and the first time interval information indicates at least one of: a value of a first time interval between the two consecutive sensing measurement instances that is supported by the access point device, a maximum value of the first time interval, or a minimum value of the first time interval.

Regarding the architecture of WLAN sensing to which the sensing measurement setup method provided in this embodiment of the present disclosure is applied as well as the WLAN sensing procedure, reference is made to the first example described above, which will not be elaborated here.

Typically, the WLAN sensing procedure generally includes a trigger based (TB) mode and a non-trigger based (NTB) mode. Specifically, the TB mode means that an AP is an initiator or transmitter, and the NTB mode means that an STA is an initiator or transmitter. In the NTB sensing measurement, each sensing measurement setup (MS) process may include multiple sensing measurement instances, and a time interval is needed for the occurrence of consecutive sensing measurement instances. Optionally, the time interval for the occurrence of each sensing measurement instance may be determined according to the needs of an upper-layer application, for example, there may be a minimum or maximum time interval. In the embodiments of the present disclosure, during the MS process, according to the negotiation between the STA (sensing initiator) and the AP (sensing responder), the AP receives a sensing measurement setup request frame (MS request frame), and acquires first time interval information for the occurrence of two consecutive sensing measurement instances that is carried in the sensing measurement setup request frame, and the two consecutive sensing measurement instances are two consecutive measurement instances belonging to the same measurement setup identifier (MS ID).

Specifically, the first time interval information indicates at least one of a value of a first time interval between the two consecutive sensing measurement instances, a maximum value of the first time interval, or a minimum value of the first time interval. That is, the first time interval information may include a specific value of a time interval between two consecutive sensing measurement instances, such as 10 milliseconds (ms); may also include a maximum value of the time interval, such as 20ms; and may also include a minimum value of the time interval, such as 5ms.

Optionally, the first time interval information is carried in a sensing measurement parameter information element.

In this embodiment of the present disclosure, the AP receives a sensing measurement setup request frame, and acquires first time interval information for the occurrence of two consecutive sensing measurement instances that is carried in the sensing measurement setup request frame. Thus, it is possible to realize the negotiation between the STA and the AP on the time interval between the two consecutive sensing measurement instances during the MS process, so as to improve the NTB sensing measurement signaling process and adapt it to the wireless sensing needs.

An embodiment of the present disclosure provides a sensing measurement setup method. Optionally, the method may be performed by an electronic device, and the electronic device may be an access point device. The method may include the following steps.

A sensing measurement setup request frame is received, in which the sensing measurement setup request frame carries first time interval information between two consecutive sensing measurement instances, and the first time interval information indicates at least one of: a value of a first time interval between the two consecutive sensing measurement instances that is supported by the access point device, a maximum value of the first time interval, or a minimum value of the first time interval.

The first time interval information includes first identification information, in which the first identification information indicates the existence or form of the first time interval information. Specifically, in a case that the first identification information is a first parameter value, for example, the first parameter value is 1, the first identification information indicates that the first time interval information carries at least one of the value of the first time interval between the two consecutive sensing measurement instances, the maximum value of the first time interval, or the minimum value of the first time interval; and in a case that the first identification information is a second parameter value, for example, the second parameter value is 0, the first identification information indicates that the first time interval information is the maximum value of the first time interval or the minimum value of the first time interval.

An embodiment of the present disclosure provides a sensing measurement setup method. Optionally, the method may be performed by an electronic device, and the electronic device may be an access point device. The method may include the following steps.

A sensing measurement setup request frame is received, in which the sensing measurement setup request frame carries first time interval information between two consecutive sensing measurement instances, and the first time interval information indicates at least one of: a value of a first time interval between the two consecutive sensing measurement instances that is supported by the access point device, a maximum value of the first time interval, or a minimum value of the first time interval.

A sensing measurement setup response frame is sent, and second identification information is carried in the sensing measurement setup response frame, in which the second identification information instructs the access point device to determine a target time interval between the two consecutive sensing measurement instances, i.e. instructs the access point device to perform a determination operation of determining the target time interval.

In a case that the second identification information is a third parameter value, the second identification information instructs the access point device to accept the first time interval information. In a case that the second identification information is a fourth parameter value, the second identification information instructs the access point device to reject the first time interval information and carry the target time interval between the two consecutive sensing measurement instances in the sensing measurement setup response frame.

After the STA sends the sensing measurement setup request frame, the AP replies with a measurement setup response (MS response) frame, and feeds back whether the AP accepts the first time interval information requested by the STA in the sensing measurement setup request frame via the second identification information in the sensing measurement setup response frame.

When the second identification information is the third parameter value, for example, the second identification information is a status code, and the third parameter value is "success", indicating that the AP accepts the first time interval information, then the STA determines the target time interval between the two consecutive sensing measurement instances according to the first time interval information. The target time interval may be the first time interval, or a time value selected between the maximum value of the first time interval and the minimum value of the first time interval (including the maximum value and the minimum value).

When the second identification information is the fourth parameter value, for example, the second identification information is a status code, and the third parameter value is "reject or decline", then the STA acquires a time value specified by the AP in the sensing measurement setup response frame as the target time interval.

An embodiment of the present disclosure provides a sensing measurement setup method. Optionally, the method may be performed by an electronic device, and the electronic device may be an access point device. The method may include the following steps.

A first radio frame is sent, and second time interval information is carried in the first radio frame, in which the second time interval information indicates a maximum value and/or a minimum value of a second time interval between the two consecutive sensing measurement instances that is supported by the access point device. The AP carries the second time interval information in the first radio frame. The second time interval information is, for example, a time interval supported by the AP, so that the STA may select a target time interval therefrom.

A sensing measurement setup request frame is received, in which the sensing measurement setup request frame carries first time interval information between two consecutive sensing measurement instances, and the first time interval information indicates at least one of: a value of a first time interval between the two consecutive sensing measurement instances that is supported by the access point device, a maximum value of the first time interval, or a minimum value of the first time interval.

Optionally, in an embodiment of the present disclosure, the first radio frame includes a beacon frame or a probe response frame.

Optionally, in an embodiment of the present disclosure, the first radio frame further includes third identification information, optionally, one bit may be used to identify capability information of the AP supporting NTB and TB sensing measurements, and the third identification information indicates a sensing measurement type supported by the access point device; the sensing measurement type includes a trigger based (TB) sensing measurement and/or a non-trigger based (NTB) sensing measurement.

In this embodiment of the present disclosure, the AP receives a sensing measurement setup request frame, and acquires first time interval information for the occurrence of two consecutive sensing measurement instances that is carried in the sensing measurement setup request frame. Thus, it is possible to realize the negotiation between the STA and the AP on the time interval between the two consecutive sensing measurement instances during the MS process, so as to improve the NTB sensing measurement signaling process and adapt it to the wireless sensing needs.

Referring to FIG. 8, based on the same principle as the method provided in the embodiments of the present disclosure, an embodiment of the present disclosure further provides an electronic device, and the electronic device is a station device and includes a sending module 801 configured to send a sensing measurement setup request frame, in which the sensing measurement setup request frame carries first time interval information between two consecutive sensing measurement instances, and the first time interval information indicates at least one of: a value of a first time interval between the two consecutive sensing measurement instances, a maximum value of the first time interval, or a minimum value of the first time interval.

Optionally, in an embodiment of the present disclosure, the first time interval information includes first identification information; in a case that the first identification information is a first parameter value, the first identification information indicates that the first time interval information carries at least one of the value of the first time interval between the two consecutive sensing measurement instances, the maximum value of the first time interval, or the minimum value of the first time interval; and in a case that the first identification information is a second parameter value, the first identification information indicates that the first time interval information is the maximum value of the first time interval or the minimum value of the first time interval.

Optionally, in an embodiment of the present disclosure, the electronic device further includes a response receiving module configured to receive a sensing measurement setup response frame and acquire second identification information in the sensing measurement setup response frame after the sending module 801 sends the sensing measurement setup request frame; and determine a target time interval between the two consecutive sensing measurement instances based on the second identification information.

Optionally, in an embodiment of the present disclosure, in a case that the second identification information is a third parameter value, the target time interval between the two consecutive sensing measurement instances is determined according to the first time interval information; and in a case that the second identification information is a fourth parameter value, the target time interval in the sensing measurement setup response frame is acquired.

Optionally, in an embodiment of the present disclosure, the electronic device further includes a first receiving module configured to receive a first radio frame and acquire second time interval information carried in the first radio frame, in which the second time interval information indicates a maximum value and/or a minimum value of a second time interval between the two consecutive sensing measurement instances that is supported by an access point device; and determine the first time interval information according to the second time interval information before the sending module 801 sends the sensing measurement setup request frame.

Optionally, in an embodiment of the present disclosure, the first radio frame includes a beacon frame or a probe response frame.

Optionally, in an embodiment of the present disclosure, the first radio frame further includes third identification information, and the third identification information indicates a sensing measurement type supported by the access point device; and the sensing measurement type includes a trigger based (TB) sensing measurement and/or a non-trigger based (NTB) sensing measurement.

Optionally, in an embodiment of the present disclosure, the first time interval information is carried in a sensing measurement parameter information element.

An embodiment of the present disclosure further provides a sensing measurement setup apparatus applied to a station device. The sensing measurement setup apparatus includes a request frame sending module configured to send a sensing measurement setup request frame, in which the sensing measurement setup request frame carries first time interval information between two consecutive sensing measurement instances, and the first time interval information indicates at least one of: a value of a first time interval between the two consecutive sensing measurement instances, a maximum value of the first time interval, or a minimum value of the first time interval.

The sensing measurement setup apparatus also includes other modules of the electronic device in the aforementioned embodiment, which will not be elaborated here.

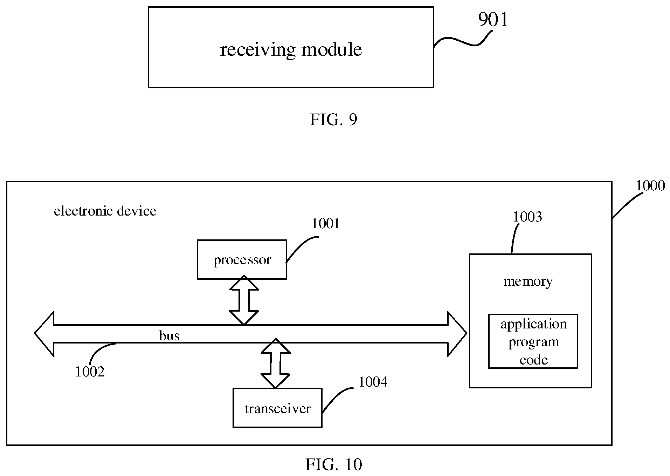

Referring to FIG. 9, based on the same principle as the method provided in the embodiments of the present disclosure, an embodiment of the present disclosure further provides an electronic device, and the electronic device is an access point device and includes a receiving module 901 configured to receive a sensing measurement setup request frame, in which the sensing measurement setup request frame carries first time interval information between two consecutive sensing measurement instances, and the first time interval information indicates at least one of: a value of a first time interval between the two consecutive sensing measurement instances that is supported by the access point device, a maximum value of the first time interval, or a minimum value of the first time interval.

Optionally, in an embodiment of the present disclosure, the first time interval information includes first identification information; in a case that the first identification information is a first parameter value, the first identification information indicates that the first time interval information carries at least one of the value of the first time interval between the two consecutive sensing measurement instances, the maximum value of the first time interval, or the minimum value of the first time interval; and in a case that the first identification information is a second parameter value, the first identification information indicates that the first time interval information is the maximum value of the first time interval or the minimum value of the first time interval.

Optionally, in an embodiment of the present disclosure, the electronic device further includes a response sending module configured to send a sensing measurement setup response frame and carry second identification information in the sensing measurement setup response frame after the receiving module 901 receives the sensing measurement setup request frame, in which the second identification information instructs the access point device to determine a target time interval between the two consecutive sensing measurement instances.

Optionally, in an embodiment of the present disclosure, in a case that the second identification information is a third parameter value, the second identification information instructs the access point device to accept the first time interval information; and in a case that the second identification information is a fourth parameter value, the second identification information instructs the access point device to reject the first time interval information and carry the target time interval between the two consecutive sensing measurement instances in the sensing measurement setup response frame.

Optionally, in an embodiment of the present disclosure, the electronic device further includes a first sending module configured to send a first radio frame and carry second time interval information in the first radio frame before the receiving module 901 receives the sensing measurement setup request frame, in which the second time interval information indicates a maximum value and/or a minimum value of a second time interval between the two consecutive sensing measurement instances that is supported by the access point device.

Optionally, in an embodiment of the present disclosure, the first radio frame includes a beacon frame or a probe response frame.

Optionally, in an embodiment of the present disclosure, the first radio frame further includes third identification information, and the third identification information indicates a sensing measurement type supported by the access point device; and the sensing measurement type includes a trigger based (TB) sensing measurement and/or a non-trigger based (NTB) sensing measurement.

Optionally, in an embodiment of the present disclosure, the first time interval information is carried in a sensing measurement parameter information element.

An embodiment of the present disclosure further provides a sensing measurement setup apparatus applied to an access point device. The sensing measurement setup apparatus includes a request frame receiving module configured to receive a sensing measurement setup request frame, in which the sensing measurement setup request frame carries first time interval information between two consecutive sensing measurement instances, and the first time interval information indicates at least one of: a value of a first time interval between the two consecutive sensing measurement instances that is supported by the access point device, a maximum value of the first time interval, or a minimum value of the first time interval.

The sensing measurement setup apparatus also includes other modules of the electronic device in the aforementioned embodiment, which will not be elaborated here.

In an optional embodiment, an embodiment of the present disclosure further provides an electronic device, as shown in FIG. 10. The electronic device 1000 shown in FIG. 10 may be a server, including: a processor 1001 and a memory 1003. The processor 1001 and the memory 1003 are connected, for example, via a bus 1002. Optionally, the electronic device 1000 may further include a transceiver 1004. It should be noted that in actual applications, the number of the transceivers 1004 is not limited to one, and the structure of the electronic device 1000 does not constitute a limitation on the embodiments of the present disclosure.

The processor 1001 may be a central processing unit (CPU), a general-purpose processor, a digital signal processor (DSP), an application specific integrated circuit (ASIC), a field programmable gate array (FPGA), or other programmable logic devices, transistor logic devices, hardware components, or any combination thereof. The processor 1001 may implement or execute various illustrative logical blocks, modules, and circuits described in conjunction with the contents of the present disclosure. The processor 1001 may also be a combination of components that implement computing functions, such as a combination of one or more microprocessors, a combination of a DSP and a microprocessor, etc.

The bus 1002 may include a path to transmit information between the above components. The bus 1002 may be a peripheral component interconnect (PCI) bus, an extended industry standard architecture (EISA) bus, or the like. The bus 1002 can be divided into an address bus, a data bus, a control bus, etc. For ease of representation, FIG. 10 illustrates only one thick line, but this does not mean that there is only one bus or one type of bus.

The memory 1003 may be a read only memory (ROM) or other types of static storage devices that may store static information and instructions, or a random access memory (RAM) or other types of dynamic storage devices that may store information and instructions; and the memory 1003 may also be an electrically erasable programmable read only memory (EEPROM), a compact disc read only memory (CD-ROM), or other optical disk storage media or optical disc storage media (including a compressed optical disk, a laser disk, an optical disk, a digital versatile disk, a Blu-ray disk, etc.), a magnetic disk storage medium or other magnetic storage devices, or any other medium that may be used to carry or store the desired program codes in the form of instructions or data structures and may be accessed by a computer, but is not limited to this.

The memory 1003 is configured to store application program codes for executing the solution of the present disclosure, and the execution is controlled by the processor 1001. The processor 1001 is used to execute the application program codes stored in the memory 1003 to implement the contents shown in the aforementioned method embodiments.

The electronic device includes, but is not limited to, a mobile terminal such as a mobile phone, a laptop computer, a digital broadcast receiver, a personal digital assistant (PDA), a tablet computer (PAD), a portable multimedia player (PMP), a vehicle-mounted terminal (such as a vehicle-mounted navigation terminal), and the like; and a fixed terminal such as a digital television (TV), a desktop computer, and the like. The electronic device shown in FIG. 10 is merely an example and should not intended to limit the functions and use scope of the embodiments of the disclosure in any way.

The server provided in the present disclosure may be an independent physical server, a server cluster or a distributed system composed of a plurality of physical servers, or a cloud server that provides basic cloud computing services such as cloud services, cloud databases, cloud computing, cloud functions, cloud storage, network services, cloud communications, middleware services, domain name services, security services, content distribution networks (CDNs), as well as big data and artificial intelligence platforms. The terminal may be a smart phone, a tablet computer, a laptop computer, a desktop computer, a smart speaker, a smart watch, or the like, but is not limited thereto. The terminal and the server may be connected directly or indirectly via wired or wireless communications, which is not limited in the present disclosure.

An embodiment of the present disclosure provides a computer-readable storage medium having stored therein a computer program that, when run on a computer, causes the computer to execute the corresponding contents in the aforementioned method embodiments.

It should be understood that, although the steps in the flowchart of the accompanying drawings are displayed sequentially as indicated by the arrows, these steps are not necessarily executed sequentially in an order indicated by the arrows. Unless otherwise specified herein, there is no strict order limitation on the execution of these steps, and these steps may be executed in other orders. Moreover, at least some of the steps in the flowchart of the accompanying drawings may include a plurality of sub-steps or a plurality of stages. These sub-steps or stages are not necessarily executed at the same moment, but may be executed at different moments. The order of execution of these steps is not necessarily sequential, but these steps may be executed in turn or alternately with other steps or at least some of sub-steps or stages of other steps.

It should be noted that the above-mentioned computer-readable medium in the present disclosure may be a computer-readable signal medium, or a computer-readable storage medium, or any combination of the above two media. The computer-readable storage medium may be, for example, but is not limited to, an electronic, magnetic, optical, electromagnetic, infrared, or semiconducting system, apparatus, or device, or any combination of the foregoing media. The more specific examples of the computer-readable storage medium may include, but are not limited to, an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing media. In the present disclosure, the computer-readable storage medium may be any tangible medium that can contain or store a program for use by or in conjunction with an instruction execution system, apparatus, or device. In the present disclosure, the computer-readable signal medium may include a data signal propagated in a baseband or as a part of a carrier wave, in which computer-readable program codes are carried. Such a propagated data signal may take a variety of forms, including, but not limited to, electromagnetic signals, optical signals, or any suitable combination of the foregoing signals. The computer-readable signal medium may also be any computer-readable medium other than computer-readable storage media, which may send, propagate or transport a program for use by or in conjunction with an instruction execution system, apparatus or device. The program code embodied on the computer-readable medium may be transmitted using any appropriate medium, including, but not limited to, a wire, an optical cable, a radio frequency (RF) medium, or the like, or any suitable combination of the foregoing media.

The above-mentioned computer-readable medium may be included in the above-mentioned electronic device, or may exist independently without being incorporated into the electronic device.

The above-mentioned computer-readable medium carries one or more programs that, when executed by the electronic device, cause the electronic device to execute the method shown in the above embodiments.

According to an aspect of the present disclosure, a computer program product or a computer program is provided, including computer instructions stored in a computer-readable storage medium. A processor of a computer device reads the computer instructions from the computer-readable storage medium and executes the computer instructions, so that the computer device executes the method in the above various optional implementations.

The computer program codes for performing operations in the present disclosure may be written in one or more programming languages or combinations thereof, including object-oriented programming languages such as Java, Smalltalk, and C++, and conventional procedural programming languages such as "C" or similar programming languages. The program codes may be executed entirely on a user computer, partly on the user computer, as a stand-alone software package, partly on the user computer and partly on a remote computer, or entirely on the remote computer or a server. In case of involving a remote computer, the remote computer may be connected to the user computer over any type of network, including a local area network (LAN) or a wide area network (WAN), or may be connected to an external computer, e.g., over the Internet using an Internet service provider.

The flowcharts and block diagrams in the accompanying drawings illustrate possibly implemented architectures, functions, and operations of systems, methods, and computer program products according to various embodiments of the present disclosure. In this regard, each block in the flowchart or block diagram may represent a module, a program segment, or a portion of code, which contains one or more executable instructions for implementing the specified logical functions. It should also be noted that, in some alternative implementations, the functions noted in the block may occur out of the order noted in the drawings. For example, two blocks shown in succession may actually be executed substantially in parallel, or they may sometimes be executed in the reverse order, depending on the functionality involved. It should also be noted that each block in the block diagram and/or flowchart, and a combination of blocks in the block diagram and/or flowchart, may be implemented by a dedicated hardware-based system that performs the specified functions or operations, or may be implemented by a combination of dedicated hardware and computer instructions.

The modules described and involved in the embodiments of the present disclosure may be implemented in software or hardware. The name of a module does not, in some cases, constitute a limitation on the module itself. For example, module A can also be described as "module A for performing operation B".

The above description is only preferred embodiments of the present disclosure and an illustration of the technical principles used. Those skilled in the art should understand that the scope of disclosure involved in the present disclosure is not limited to the technical solutions formed by a specific combination of the above-mentioned technical features, but should also cover other technical solutions formed by any combination of the above-mentioned technical features or equivalent features thereof without departing from the above-mentioned concepts of the present disclosure. For example, the above-mentioned features are replaced with the technical features with similar functions disclosed in the present disclosure (but not limited to this) to form a technical solution.

## Claims

1. A sensing measurement setup method, performed by a station device and comprising:
sending a sensing measurement setup request frame, wherein the sensing measurement setup request frame carries first time interval information between two consecutive sensing measurement instances,
wherein the first time interval information indicates at least one of:
a value of a first time interval between the two consecutive sensing measurement instances;
a maximum value of the first time interval; or
a minimum value of the first time interval.

2. The sensing measurement setup method according to claim 1, wherein the first time interval information comprises first identification information;
in a case that the first identification information is a first parameter value, the first identification information indicates that the first time interval information carries at least one of the value of the first time interval between the two consecutive sensing measurement instances, the maximum value of the first time interval, or the minimum value of the first time interval; and
in a case that the first identification information is a second parameter value, the first identification information indicates that the first time interval information is the maximum value of the first time interval or the minimum value of the first time interval.

3. The sensing measurement setup method according to claim 1, after sending the sensing measurement setup request frame, further comprising:
receiving a sensing measurement setup response frame, and acquiring second identification information in the sensing measurement setup response frame; and
determining a target time interval between the two consecutive sensing measurement instances based on the second identification information.

4. The sensing measurement setup method according to claim 3, wherein determining the target time interval between the two consecutive sensing measurement instances based on the second identification information comprises:
in a case that the second identification information is a third parameter value, determining the target time interval between the two consecutive sensing measurement instances according to the first time interval information; and
in a case that the second identification information is a fourth parameter value, acquiring the target time interval in the sensing measurement setup response frame.

5. The sensing measurement setup method according to claim 1, before sending the sensing measurement setup request frame, comprising:
receiving a first radio frame, and acquiring second time interval information carried in the first radio frame, wherein the second time interval information indicates a maximum value and/or a minimum value of a second time interval between the two consecutive sensing measurement instances that is supported by an access point device; and
determining the first time interval information according to the second time interval information.

6. The sensing measurement setup method according to claim 5, wherein the first radio frame comprises a beacon frame or a probe response frame.

7. The sensing measurement setup method according to claim 5, wherein the first radio frame further comprises third identification information, and the third identification information indicates a sensing measurement type supported by the access point device;
the sensing measurement type comprises a trigger based (TB) sensing measurement and/or a non-trigger based (NTB) sensing measurement.

8. The sensing measurement setup method according to any one of claims 1 to 7, wherein the first time interval information is carried in a sensing measurement parameter information element.

9. A sensing measurement setup method, performed by an access point device and comprising:
receiving a sensing measurement setup request frame, wherein the sensing measurement setup request frame carries first time interval information between two consecutive sensing measurement instances,
wherein the first time interval information indicates at least one of:
a value of a first time interval between the two consecutive sensing measurement instances that is supported by the access point device;
a maximum value of the first time interval; or
a minimum value of the first time interval.

10. The sensing measurement setup method according to claim 9, wherein the first time interval information comprises first identification information;
in a case that the first identification information is a first parameter value, the first identification information indicates that the first time interval information carries at least one of the value of the first time interval between the two consecutive sensing measurement instances, the maximum value of the first time interval, or the minimum value of the first time interval; and
in a case that the first identification information is a second parameter value, the first identification information indicates that the first time interval information is the maximum value of the first time interval or the minimum value of the first time interval.

11. The sensing measurement setup method according to claim 9, after receiving the sensing measurement setup request frame, further comprising:
sending a sensing measurement setup response frame, and carrying second identification information in the sensing measurement setup response frame,
wherein the second identification information instructs the access point device to determine a target time interval between the two consecutive sensing measurement instances.

12. The sensing measurement setup method according to claim 11, wherein
in a case that the second identification information is a third parameter value, the second identification information instructs the access point device to accept the first time interval information; and
in a case that the second identification information is a fourth parameter value, the second identification information instructs the access point device to reject the first time interval information and carry the target time interval between the two consecutive sensing measurement instances in the sensing measurement setup response frame.

13. The sensing measurement setup method according to claim 9, before receiving the sensing measurement setup request frame, comprising:
sending a first radio frame, and carrying second time interval information in the first radio frame, wherein the second time interval information indicates a maximum value and/or a minimum value of a second time interval between the two consecutive sensing measurement instances supported by the access point device.

14. The sensing measurement setup method according to claim 13, wherein the first radio frame comprises a beacon frame or a probe response frame.

15. The sensing measurement setup method according to claim 13, wherein the first radio frame further comprises third identification information, and the third identification information indicates a sensing measurement type supported by the access point device;
the sensing measurement type comprises a trigger based (TB) sensing measurement and/or a non-trigger based (NTB) sensing measurement.

16. The sensing measurement setup method according to any one of claims 9 to 15, wherein the first time interval information is carried in a sensing measurement parameter information element.

17. An electronic device, being a station device and comprising:
a sending module configured to send a sensing measurement setup request frame, wherein the sensing measurement setup request frame carries first time interval information between two consecutive sensing measurement instances,
wherein the first time interval information indicates at least one of:
a value of a first time interval between the two consecutive sensing measurement instances;
a maximum value of the first time interval; or
a minimum value of the first time interval.

18. An electronic device, being an access point device and comprising:
a receiving module configured to receive a sensing measurement setup request frame, wherein the sensing measurement setup request frame carries first time interval information between two consecutive sensing measurement instances,
wherein the first time interval information indicates at least one of:
a value of a first time interval between the two consecutive sensing measurement instances that is supported by the access point device;
a maximum value of the first time interval; or
a minimum value of the first time interval.

19. An electronic device, comprising:
a memory;
a processor; and
a computer program stored in the memory and runnable on the processor,
wherein the processor is configured to implement the method according to any one of claims 1 to 8 or any one of claims 9 to 16 when executing the program.

20. A computer-readable storage medium having stored therein a computer program that, when executed by a processor, causes the method according to any one of claims 1 to 8 or any one of claims 9 to 16 to be implemented.
